# EUROPEAN PATENT SPECIFICATION

(11) **EP 4 317 475 B1**
(45) Date of publication and mention of the grant of the patent: **16.09.2026**
(21) Application number: 22781100.7
(22) Date of filing: 30.03.2022
(51) Int. Cl.: C21D 8/1205, C21D 8/1244, C21D 8/1216, C21D 6/00, C21D 9/46, C22C 38/60, C22C 38/50, C22C 38/12, C22C 38/00, C22C 38/06, C22C 38/04, C22C 38/02, C22C 38/14, C22C 38/34, C22C 38/28, H01F 1/16, H01F 1/147

(54) **NON-ORIENTED ELECTROMAGNETIC STEEL SHEET AND MANUFACTURING METHOD THEREFOR**
NICHTORIENTIERTES ELEKTROMAGNETISCHES STAHLBLECH UND HERSTELLUNGSVERFAHREN DAFÜR
TÔLE D'ACIER ÉLECTROMAGNÉTIQUE NON-ORIENTÉ ET SON PROCÉDÉ DE FABRICATION

(30) Priority: 31.03.2021 JP 2021061872
(43) Date of publication of application: 07.02.2024
(73) Proprietor: NIPPON STEEL CORPORATION, Chiyoda-ku Tokyo 100-8071 (JP)
(72) Inventor: NATORI, Yoshiaki, Tokyo 100-8071 (JP); YASHIKI, Hiroyoshi, Tokyo 100-8071 (JP); FUKUCHI, Minako, Tokyo 100-8071 (JP); TAKEDA, Kazutoshi, Tokyo 100-8071 (JP)
(74) Representative: Vossius & Partner Patentanwälte Rechtsanwälte mbB
(86) International application number: PCT/JP2022/016029
(87) International publication number: WO 2022/210890

(56) References cited:
- EP-A1- 3 904 540
- EP-A1- 4 400 610
- WO-A1-2020/137500
- WO-A1-2020/153387
- WO-A1-2021/006280
- WO-A2-2020/111783
- JP-A- 2019 178 373
- JP-A- 2020 139 198
- JP-A- H02 263 920
- JP-A- H03 219 020
- STEINER PETROVIC DARJA ET AL: "Magnesium Non-metallic Inclusions in Non-oriented Electrical Steel Sheets", vol. 51, no. 12, 1 December 2011 (2011-12-01), pages 2069 - 2075, XP009557770, ISSN: 0915-1559, Retrieved from the Internet <URL:http://www.jstage.jst.go.jp/article/isijinternational/51/12/51_12_2069/_article> [retrieved on 20111215], DOI: 10.2355/ISIJINTERNATIONAL.51.2069
- LIU CHANG ET AL: "Evolution of Sulfides in Nonoriented Silicon Steels during Heating Process", vol. 92, no. 4, 1 April 2021 (2021-04-01), pages 2000489 - 1, XP009557769, ISSN: 0177-4832, Retrieved from the Internet <URL:https://onlinelibrary.wiley.com/doi/full-xml/10.1002/srin.202000489> [retrieved on 20201117], DOI: 10.1002/SRIN.202000489

## Description

### [Technical Field]

The present invention relates to a non-oriented electrical steel sheet and a manufacturing method therefor. Priority is claimed on Japanese Patent Application No. 2021-61872, filed March 31, 2021.

### [Background Art]

In recent years, due to worldwide enhanced energy saving for electrical instruments, higher performance properties have been required for non-oriented electrical steel sheets used as materials for motors. In particular, there is a strong need to reduce iron loss, and low iron loss can be achieved by increasing specific resistance by increasing the Si or Al content, and increasing the crystal grain diameter.

Patent Document 1 discloses a non-oriented electrical steel sheet with a lower iron loss, which addresses the problem of nitriding that becomes apparent in a steel sheet in which sulfides are detoxified and grain growth is improved.

WO 2020/137500 A1 discloses a non-oriented electrical steel sheet having a tensile strength of 600 MPa or more and a fatigue strength of 450 MPa or more. EP 4 400 610 A1 is a prior art under Art. 54 (3) EPC and discloses a non-oriented electrical steel sheet and a method for producing a non-oriented electrical steel sheet.

### [Citation List]

### [Patent Document]

[Patent Document 1]
Japanese Unexamined Patent Application, First Publication No. 2005-330527

### [Summary of the Invention]

### [Problems to be Solved by the Invention]

The use of motors for applications such as drive motors of hybrid automobiles is in an environment with stress change caused by changes in rotation speed according to an acceleration/deceleration operation, vehicle body vibration, and magnet vibration in magnet insertion holes. Therefore, in addition to high strength that can has an application during high-speed rotation and in stress concentration parts, a fatigue property under repeated stress, that is, fatigue strength, is also required.

However, in the non-oriented electrical steel sheet whose tensile strength is increased to 580 MPa or more, the fatigue strength appropriate for strength may not be obtained. In the present invention, an object is to provide a non-oriented electrical steel sheet having a tensile strength of 580 MPa or more and having excellent fatigue strength.

### [Means for Solving the Problem]

The inventors conducted extensive studies regarding the fatigue strength of non-oriented electrical steel sheets. As a result, it was found that, in an electrical steel sheet with low fatigue strength, soft MnS deforms, and becomes a starting point for cracks. In addition, it was found that, in an electrical steel sheet with high fatigue strength, the amount of MnS in inclusions is relatively small.

In addition, as a result of additional intensive studies, it was found that fatigue strength is improved by converting sulfides in inclusions into harder inclusions containing Mg.

The present invention has been further studied based on the above findings, and the gist thereof is as follows.

The non-oriented electrical steel sheet according to the invention is defined in the independent method claim 1. The method for manufacturing the non-oriented electrical steel sheet according to the invention is defined in the independent method claim 4. Preferred embodiments are defined in the dependent claims.

### [Effects of the Invention]

According to the present invention, it is possible to obtain a non-oriented electrical steel sheet having a tensile strength of 580 MPa or more and also excellent fatigue strength.

### [Embodiment(s) for implementing the Invention]

Hereinafter, embodiments of the present invention will be described in detail.

In the non-oriented electrical steel sheet according to one embodiment of the present invention, fatigue strength is improved by converting sulfides in inclusions in base iron into harder inclusions containing Mg. In the present invention, harder inclusions containing Mg are defined as follows. In element concentration analysis by Energy Dispersive X-ray Spectrometry (hereinafter referred to as "EDS"), when all detected elements (excluding C) are quantified, inclusions in which more than 5 mass% of Mg is detected and 5 mass% or more of S is detected are defined as "harder inclusions containing Mg." In the present invention, among the harder inclusions containing Mg, inclusions having an equivalent circle diameter of 1 µm or more are focused on.

Therefore, in inclusions having an equivalent circle diameter of 1 µm or more and inclusions having an S content of 5 mass% or more, the number of "inclusions having a Mg content of more than 5 mass% and a Mn content of 5 mass% or more" is 5 times or more the number of "inclusions having a Mg content of 5 mass% or less and a Mn content of 5 mass% or more."

Thereby, inclusions are hardened, the inclusions are less likely to become starting points for cracks due to deformation, and fatigue strength is improved. In inclusions having an equivalent circle diameter of 1 µm or more and having an S content of 5 mass% or more contained in base iron, the number of inclusions having a Mg content of more than 5 mass% and a Mn content of 5 mass% or more is preferably 10 times or more the number of inclusions having a Mg content of 5 mass% or less and a Mn content of 5 mass% or more.

Analysis of inclusions is performed by observing a full-sheet thickness region using an SEM. In order to obtain an observable area, the observation surface may be prepared by oblique polishing, or the observation surface may be prepared by laminating a plurality of steel sheets. The steel sheet is cut out and filled with a resin so that a surface including a width direction (direction perpendicular to a rolling direction) and a sheet thickness direction becomes the observation surface. Next, the observation surface of the resin-filled steel sheet is polished. The area to be observed may be changed according to the number of inclusions present, and is 5 mm² or more. The size of inclusions is determined by measuring the size of inclusions using image analysis software, and by defining the diameter when converted to a circle equivalent. The inclusions can be subjected to element analysis using EDS, and a component is defined by an average value for an entire mass of individual inclusions.

In each field of view, the number of inclusions having an equivalent circle diameter of 1.0 µm or more and an S content of 5 mass% or more detected is determined. Specifically, first, the inclusions in each field of view are identified from the contrast. Among the identified inclusions, inclusions having an equivalent circle diameter of 1.0 µm or more are subjected to element concentration analysis (EDS analysis). All detected elements (excluding C) are quantified, and inclusions having an equivalent circle diameter of 1.0 µm or more and having a Mg content of 5 mass% or less and a Mn content of 5 mass% or more and inclusions having an equivalent circle diameter of 1.0 µm or more and having a Mg content of more than 5 mass% and a Mn content of 5 mass% or more are identified.

Among the inclusions identified in the observed field of view range with an area of 5 mm² or more, within inclusions having an equivalent circle diameter of 1.0 µm or more and having an S content of 5 mass% or more and a Mn content of 5 mass% or more, the number of inclusions having a Mg content of 5 mass% or less and the number of inclusions having a Mg content of more than 5 mass% are obtained and a ratio thereof is calculated.

When the number density (pieces/mm²) is obtained based on the total area of the observed field of view, the obtained numerical value is rounded off to the third decimal place. Here, the number density is measured using a device (SEM-EDS device) in which a composition analysis function is imparted to a scanning electron microscope.

In addition, if there are coarse inclusions, the inclusions may become starting points for cracks, and lower the fatigue limit. Therefore, fewer coarse inclusions are preferable. Specifically, the number density of inclusions having an equivalent circle diameter of 5 µm or more is preferably less than 1.0 piece/mm².

A method for making the number density of inclusions having an equivalent circle diameter of 5 µm or more less than 1.0 piece/mm² is not particularly limited, and examples thereof include methods in which inclusions float on the surface of molten steel while the molten steel remains in a tundish, in continuous casting, an electromagnetic brake is applied to the molten steel in the mold to lengthen the time during which the molten steel remains in the mold and allow inclusions to float on the surface of the molten steel, or a mold longer in a vertical direction is used to lengthen the time during which the molten steel remains in the mold and allow inclusions to float on the surface of the molten steel, and the floated inclusions are removed later.

In addition, realization of inclusions containing Mg defined in the present invention also contributes to making the number density of inclusions having an equivalent circle diameter of 5 µm or more less than 1.0 piece/mm². Examples of coarse inclusions having an equivalent circle diameter of 5 µm or more include Al₂O₃ and MnS. Between Al and Mg, Mg has a higher deoxidizing power than Al. Therefore, in the present invention that utilizes Mg, Al₂O₃ is secondarily reduced in the steelmaking stage and MgO is likely to be produced. If Al₂O₃ is used without change, it has a large specific gravity and tends to remain in the molten steel, but MgO has a small specific gravity and easily floats, and thus it is easy to remove. In addition, regarding MnS, Mg is more likely to form sulfides than Mn, and more likely to initiate precipitation at a higher temperature than MnS. Therefore, the amount of MnS precipitated is reduced. Furthermore, MgS, which is uniformly dispersed first, becomes a precipitation site for MnS that precipitates later, and thus the frequency of formation of coarse MnS formed by itself is reduced. Therefore, formation of coarse inclusions can be reduced by controlling Mg inclusions.

In the non-oriented electrical steel sheet according to the present embodiment, the microstructure has almost 100% of ferrite. The remainder of the microstructure is inclusions and the like. Thus, the average grain size of the recrystallization part is 50 µm or less. As the crystal grains coarsen, the strength decreases. Here, the recrystallization part refers to crystal grains (recrystallized grains) having an aspect ratio (length in rolling direction/length in sheet thickness direction) of 3 or less among ferrite grains. On the other hand, non-recrystallized grains have an aspect ratio of more than 3. When the microstructure is observed and the grain size of non-recrystallized grains and recrystallized grains is determined, the following method can be used. A test piece having an observation surface including the rolling direction and the sheet thickness direction of the steel sheet is prepared, and the center part of the sheet thickness is observed. The observation surface of the test piece is polished to a mirror surface, and then immersed in a 3% nital etchant for 10 seconds, and the structure is exposed by etching. The etched observation surface is observed using an optical microscope at a magnification of 500. Crystal grains having an aspect ratio of 3 or less are identified from the observation surface after etching, and the average grain size is calculated therefrom. The average grain size is determined according to JIS G 0551: 2013 "microscopic test method of steel-crystal grain size." The lower limit of the average grain size of the recrystallization part is not particularly limited, but if the crystal grains are excessively refined, and the average grain size is too small, the sheet shape of the steel sheet may deteriorate. Therefore, the average grain size of the recrystallization part is preferably 10 µm or more, more preferably 12 µm or more, and still more preferably 15 µm or more. In addition, the proportion of non-recrystallized grains may be 100%. When no recrystallized grains are observed, the average grain size defined in the present invention is set to 0.

The tensile strength of the non-oriented electrical steel sheet according to the present invention is 580 MPa or more. Since the chemical composition for increasing the tensile strength is known, it may be appropriately adjusted. The chemical composition of the non-oriented electrical steel sheet according to the present invention is the chemical composition to be described below. In addition, in order to obtain a tensile strength of 580 MPa or more, as will be described below, it is necessary to adjust the final annealing temperature.

The tensile strength is measured using JIS Z 2241: 2011 No. 13B tensile test piece.

The chemical composition of the non-oriented electrical steel sheet according to the presentinvention will be shown. "%" in the description of the chemical composition is "mass%." The non-oriented electrical steel sheet according to the present embodiment has a chemical composition containing, in mass%, Si: 2.5 to 4.5%, sol. Al: 0 to 2.0%, Mn: 0.1 to 3.5%, C: 0 to 0.0030%, P: 0 to 0.10%, S: 0 to 0.0030%, N: 0.0017 to 0.050%, O: 0 to 0.050%, Mg: 0.0003 to 0.0050%, Ti: 0.0030% or less, V: 0 to 0.10%, Sb: 0 to 0.10%, Nd: 0 to 0.10%, Bi: 0 to 0.10%, W: 0 to 0.10%, Nb: 0 to 0.10%, Y: 0 to 0.10%, and one or more selected from the group consisting of Ni: 0 to 0.5%, Cr: 0 to 0.5%, Cu: 0 to 0.5%, Sn: 0 to 0.2%, La: 0 to 0.0050%, and, Ce: 0 to 0.0050%, with the remainder of Fe and impurities.

Si is an element that increases the strength of the steel sheet. In addition, Si is an element that increases resistivity and is contained in order to reduce iron loss. In consideration of this effect and prevention of a decrease in the saturated magnetic flux density and embrittlement of steel, the Si content is 2.5 to 4.5%. The Si content is preferably 2.8% or more and more preferably 3.0% or more. In addition, the Si content is preferably 4.2% or less, and more preferably 4.0% or less.

Like Si, sol. Al is an element that increases resistivity, and is contained in order to reduce iron loss. Since the effect of reducing iron loss is obtained even with Si, sol. Al does not have to be contained. Therefore, the sol. Al content may be 0%. The sol. Al content may be 0.3% or more, 0.4% or more, 0.5% or more, or 0.6% or more. On the other hand, in order to prevent the saturated magnetic flux density from decreasing, the sol. Al content is 2.0% or less. The sol. Al content is preferably 1.8% or less, and more preferably 1.5% or less. The sol. Al content may be 1.2% or less. Here, sol. Al means acid-soluble Al that does not become an oxide such as Al₂O₃ and is soluble in an acid, and is determined as Al measured after the undissolved residue on the filter paper generated in the Al analysis procedure is removed.

Like Si and sol. Al, since Mn has a function of increasing resistivity, it is contained in order to reduce iron loss. In addition, Mn is an element that increases the strength of the steel sheet. In consideration of this effect and prevention of a decrease in the saturated magnetic flux density and embrittlement of steel, the Mn content is 0.1 to 3.5%. The Mn content is preferably 0.4% or more, more preferably 0.6% or more, and yet more preferably 0.8% or more. The Mn content may be 0.9% or more, 1.0% or more, or 1.2% or more. In addition, the Mn content is preferably 3.3% or less. The Mn content may be 3.0% or less.

C is contained as an impurity. In order to reduce iron loss, the C content is 0.0030% or less. The C content is preferably 0.0025% or less, and more preferably 0.0020% or less. The lower limit of the C content is not particularly limited and may be 0%, and the C content may be 0.0010% or more in consideration of manufacturing cost.

P is an element that improves the strength of the steel sheet. Since the strength of the steel sheet can be improved with Si and Mn, P does not have to be contained. Therefore, the P content may be 0%. The P content may be 0.01% or more, 0.02% or more, or 0.04% or more. On the other hand, in order to prevent embrittlement of the steel sheet, the P content is 0.10% or less. The P content is preferably 0.08% or less, and more preferably 0.06% or less. The P content may be 0.04% or less.

S is contained as an impurity. In order to reduce iron loss, the S content is 0.0030% or less. The S content is preferably 0.0025% or less, and more preferably 0.0020% or less. In addition, in order to form inclusions having an S content of 5 mass% or more, the S content of the steel sheet is more than 0%. The S content may be 0.0006% or more, or 0.0007% or more.

N is contained as an impurity. In order to reduce iron loss, the N content is 0.050% or less. If the N content is 0.050% or less, excessive generation of inclusions and precipitates can be reduced and deterioration of magnetic properties and fatigue strength can be further reduced. The N content may be 0.0027% or less, 0.0025% or less, or 0.0020% or less. In order to reduce an excessive cost increase, the N content is 0.0017% or more, or preferably 0.0020% or more.

O is contained as an impurity. In order to reduce iron loss, the O content is 0.050% or less. If the O content is 0.050% or less, excessive generation of inclusions and precipitates can be reduced and deterioration of magnetic properties and fatigue strength can be further reduced. The O content may be 0.0027% or less, 0.0025% or less, or 0.0020% or less. In addition, since O may not be contained in the non-oriented electrical steel sheet, the lower limit of the O content may be 0%, but in order to reduce an excessive cost increase, the O content is preferably 0.0010% or more. The O content may be 0.0014% or more, 0.0017% or more, or 0.0020% or more.

Mg is an element that reduces iron loss through a function of promoting growth of crystal grains, and is an element that improves fatigue strength by converting sulfides in inclusions into harder inclusions containing Mg. In order to obtain this effect, in consideration of cost, the Mg content is 0.0003 to 0.0050%. The Mg content is preferably 0.0005% or more, and more preferably 0.0010% or more. The Mg content is preferably 0.0040% or less and more preferably 0.0030% or less.

Ti is an element contained as an impurity. Ti is combined with C, N, O, or the like in base iron to form fine precipitates such as TiN, TiC, and Ti oxides, which inhibit growth of crystal grains during annealing and deteriorates magnetic properties. Therefore, the Ti content is 0.0030% or less. The Ti content is preferably 0.0020% or less, and more preferably 0.0010% or less. Since Ti does not need to be contained, the lower limit of the content is 0%. In consideration of refining cost, the Ti content may be 0.0003% or more or 0.0005% or more.

The remainder of the chemical composition is made up of Fe and impurities. Impurities refer to components that are included in raw materials or components that are mixed in during a manufacturing procedure, and components that are not intentionally included in the steel sheet. Examples of impurities include Zn and B.

In addition, the non-oriented electrical steel sheet according to the present embodiment may contain V: 0 to 0.10%, Zr: 0 to 0.10%, Sb: 0 to 0.10%, Nd: 0 to 0.10%, Bi: 0 to 0.10%, W: 0 to 0.10%, Nb: 0 to 0.10%, Y: 0 to 0.10%, and Ca: 0 to 0.0050%.

V and Nb are elements that contribute to increasing the strength of the non-oriented electrical steel sheet. Since V and Nb may not be contained, the amounts of each of V and Nb may be 0%, but in order to obtain the above effect, and the amounts of each of V and Nb is preferably 0.0010% or more. The amounts of each of V and Nb may be 0.0023% or more. On the other hand, if each element of V and N is excessively contained, since fine precipitates inhibit grain growth and deteriorates iron loss, the amounts of each of V and Nb is 0.10% or less. The amounts of each of V and Nb is preferably 0.0050% or less.

Zr, Nd, Bi, W, and Y are elements that reduce fine precipitates and improve grain growth of crystal grains. As a result, the productivity is improved. Since the above elements may not be contained, the amounts of each of Zr, Nd, Bi, W, and Y may be 0%, and in order to obtain the above effect, the amounts of each of Zr, Nd, Bi, W, and Y is preferably 0.0010% or more. The amounts of each of Zr, Nd, Bi, W, and Y is more preferably 0.0015% or more. On the other hand, even if each element of Zr, Nd, Bi, W, and Y is excessively contained, since the above effect is maximized, the amounts of each of Zr, Nd, Bi, W, and Y is 0.10% or less. The amounts of each of Zr, Nd, Bi, W, and Y is preferably 0.0010% or less.

Sb is an element that improves magnetic properties, for example, B50. Since Sb may not be contained, the Sb content may be 0%, in order to obtain the above effect, the Sb content is preferably 0.0050% or more. The Sb content is more preferably 0.01% or more. On the other hand, even if Sb is excessively contained, since the above effect is maximized, the Sb content is 0.10% or less. The Sb content is preferably 0.05% or less.

In addition, in addition to the above elements, the steel sheet may contain one or more elements selected from the group consisting of Ni, Cr, Cu, Sn, La, and Ce in place of some Fe.

Ni is an element that increases the electrical resistance of a steel sheet and reduces iron loss. It is not necessary to contain Ni, and the lower limit of the Ni content is 0%. Although the Ni inclusion effect is obtained even if the amount is very small, in order to reliably obtain the inclusion effect, the Ni content is preferably 0.01% or more and more preferably 0.02% or more. In consideration of production cost, the Ni content is 0.5% or less and preferably 0.4% or less.

Cr is an element that improves corrosion resistance and high frequency characteristics. It is not necessary to contain Cr, and the lower limit of the Cr content is 0%. Although the Cr inclusion effect is obtained even if the amount is very small, in order to reliably obtain the inclusion effect, the Cr content is preferably 0.01% or more and more preferably 0.02% or more. In consideration of production cost, the Cr content is 0.5% or less and preferably 0.4% or less.

Cu is an element that increases the electrical resistance of a steel sheet and reduces iron loss. It is not necessary to contain Cu, and the lower limit of the Cu content is 0%. Although the Cu inclusion effect is obtained even if the amount is very small, in order to reliably obtain the inclusion effect, the Cu content is preferably 0.01% or more and more preferably 0.02% or more. In consideration of production cost, in order to prevent embrittlement of steel, the Cu content is 0.5% or less and preferably 0.4% or less.

Sn is an element that exhibits preferable crystal orientation for magnetic properties. It is not necessary to contain Sn, and the lower limit of the Sn content is 0%. Although the Sn inclusion effect is obtained even if the amount is very small, in order to reliably obtain the inclusion effect, the content is preferably 0.01% or more and more preferably 0.02% or more. In order to prevent magnetic properties from deteriorating, the Sn content is 0.2% or less and preferably 0.1% or less.

La is an element that coarsens sulfides, improves growth of crystal grains in the heat treatment step, and contributes to decreasing the iron loss. It is not necessary to contain La, and the lower limit of the La content is 0%. Although the La inclusion effect is obtained even if the amount is very small, in order to reliably obtain the inclusion effect, the La content is preferably 0.005% or more and more preferably 0.0010% or more. In order to prevent magnetic properties from deteriorating, the La content is 0.0050% or less and preferably 0.0030% or less.

Ce is an element that coarsens sulfides, improves growth of crystal grains in the heat treatment step, and contributes to decreasing the iron loss. It is not necessary to contain Ce, and the lower limit of the Cu content is 0%. Although the Ce inclusion effect is obtained even if the amount is very small, in order to reliably obtain the inclusion effect, the Ce content is preferably 0.005% or more and more preferably 0.0010% or more. In order to prevent magnetic properties from deteriorating, the Ce content is 0.0050% or less and preferably 0.0030% or less.

In addition, in addition to the above elements, instead of Fe, one or more elements selected from the group consisting of As, Ga, Ge, Se, Co, and Pb may be contained in a range of 0 to 0.01%.

The sheet thickness of the non-oriented electrical steel sheet according to the present embodiment is preferably less than 0.30 mm. If the sheet thickness is less than 0.30 mm, deterioration of magnetic properties is reduced.

Next, a method for manufacturing the non-oriented electrical steel sheet according to an embodiment of the present invention will be described.

First, a steel slab having a predetermined chemical composition is manufactured. The slab is first melted in a converter, an electric furnace or the like, and additionally, subjected to a vacuum degassing treatment as necessary to obtain molten steel. Then, the obtained molten steel is continuously cast or slabbed after ingot making to form a slab having a thickness of about 30 to 400 mm. A cooling rate at 1,300°C to 1,200°C is set to 50°C/s or slower. If the cooling rate is too fast, MgS is not manufactured preferentially over MnS, and the number of inclusions having a Mg content of more than 5 mass% and a Mn content of 5 mass% or more decreases, and as a result, the fatigue strength of the non-oriented electrical steel sheet decreases. The thickness of the steel slab may be 150 mm or more. In addition, the thickness of the steel slab may be 350 mm or less.

After the steel slab is manufactured, the steel slab is heated again, and hot-rolled to obtain a hot-rolled steel sheet. In the heating of the steel slab, the holding time at which the center temperature is 1,100°C or higher is shorter than 2 hours (excluding 0). If the holding time is too long, the amount of sulfides with a low Mg content increases, and as a result, the fatigue strength of the non-oriented electrical steel sheet decreases. Hot rolling conditions are not particularly limited. For example, the final rolling temperature during final rolling may be 700 to 1,050°C.

After hot rolling, coiling, hot-band annealing, and cold rolling are performed. The coiling temperature during hot rolling is 700°C or higher. The coiling temperature during hot rolling is, for example, 700 to 1,000°C. If the coiling temperature is lower than 700°C, S alone in a solid solution state at this time forms MnS and MnS that does not contain Mg is likely to be formed. Other conditions are not particularly limited. Hot-band annealing may be omitted. Hot-band annealing can be performed by, for example, continuous annealing at 950°C or higher and 1,050°C or lower for 10 seconds or longer and 3 minutes or shorter. Cold rolling can be performed, for example, in a temperature range of room temperature to 300°C at a rolling reduction rate of 70 to 90%.

After cold rolling is performed to obtain a cold-rolled steel sheet, the steel sheet is subjected to final annealing to obtain a non-oriented electrical steel sheet. In order to obtain a non-oriented electrical steel sheet having high tensile strength and excellent fatigue strength, final annealing is performed at a low temperature. Specifically, final annealing is performed with a maximum temperature of 700 to 900°C and a soaking time of, for example, 10 to 60 seconds. Here, the soaking time is a time during which the maximum temperature reached -10°C. A more optimal maximum temperature may be appropriately adjusted according to the chemical component. According to final annealing at a low temperature, the growth of crystal grains is inhibited, the average grain size of the recrystallization part is 50 µm or less, and a non-oriented electrical steel sheet having high tensile strength and excellent fatigue strength can be obtained.

The non-oriented electrical steel sheet manufactured as described above has excellent fatigue strength with a high tensile strength of 580 MPa or more.

The fatigue strength can be obtained by a pulsating tensile test according to JIS Z 2273: 2011. Specifically, a fatigue test piece in which the rolling direction and the tensile direction are matched is taken from the non-oriented electrical steel sheet. A JIS 2-15 test piece is used as the test piece shape. End surfaces of a parallel portion and an R portion are polished with 600 abrasive paper, and a pulsating tensile test is then performed at room temperature in an atmospheric atmosphere. The maximum stress at which breakage did not occur after 2 million cycles of repeated stress loads at a stress ratio of 0.10 and a frequency of 20 Hz is used as the fatigue strength (MPa). In the present invention, if the fatigue strength is 450 MPa or more, it is determined that fatigue strength is excellent.

Examples of preferable embodiments of the present invention have been described, but the present invention is not limited to the above examples. For example, a method for manufacturing a non-oriented electrical steel sheet according to the present embodiment may include other known manufacturing steps.

### [Examples]

Hereinafter, the present invention will be described in detail with reference to examples, but the present invention is not limited thereto. It can be clearly understood that those skilled in the art can realize various modification examples and alternations within the scope of the claims.

### Example 1 which is outside of the claimed invention

A steel type (Mg-free) having a chemical composition containing Si: 3.3%, sol. Al: 0.7%, Mn: 1.2%, C: 0.002%, P: 0.02%, S: 0.0010%, and Ti: 0.0015%, with the remainder of Fe and impurities, and a steel type (Mg added) containing Mg: 0.0013% in place of a part of Fe in the steel type were used to prepare an electrical steel sheet, and the tensile strength and the fatigue strength were measured by the above method.

In the manufacture of electrical steel sheets, the cooling rate of 1,300°C to 1,200°C in casting was 30°C/s, the holding time at a center temperature of 1,100°C or higher in heating the steel slab before hot rolling was 1 hour, the coiling temperature was 750°C, and the final annealing temperature was changed between 750 and 1,000°C.

Table 1 shows the tensile strength and fatigue strength of the electrical steel sheets with different final annealing temperatures and with and without Mg. In this test, a tensile strength of 580 MPa or more and a fatigue strength of 450 MPa or more were determined to be satisfactory. In the Mg-added electrical steel sheet having the above chemical component, favorable results were obtained when the final annealing temperature was set to 750 to 800°C.

**[Table 1]**

| Final annealing temperature (°C) | Mg added | | Without Mg | |
|---|---|---|---|---|
| | TS (MPa) | σₘₐₓ (MPa) | TS (MPa) | σₘₐₓ (MPa) |
| 750 | 631 | 510 | 624 | 470 |
| 800 | 620 | 500 | 618 | 460 |
| 850 | 589 | 460 | 587 | 440 |
| 900 | 573 | 440 | 570 | 420 |
| 950 | 558 | 420 | 555 | 410 |
| 1000 | 541 | 410 | 539 | 400 |

### (Example 2)

Using non-oriented electrical steel sheets having components shown in Tables 2A and 2B, under conditions of a cooling rate during casting, a holding time in a heating furnace before hot rolling at 1,100°C or higher, a coiling temperature, and the maximum temperature during final annealing shown in Table 3A, non-oriented electrical steel sheets having a sheet thickness shown in Table 3A were manufactured.

In the manufactured non-oriented electrical steel sheet, the number of "inclusions having a Mg content of 5 mass% or less and a Mn content of 5% or more" per 1 mm², the number of "inclusions having a Mg content of more than 5% and a Mn content of 5% or more" per 1 mm², the average grain size of the recrystallization part, the tensile strength, and the fatigue strength were measured by the above methods.

### [Microstructure observation test]

The microstructure of the steel sheet of each test number was observed by the following method, and the grain size of the recrystallization part of the ferrite structure was obtained. A test piece including a surface including a rolling direction and a sheet thickness direction of each steel sheet was prepared, the observation surface of the test piece was polished to a mirror surface, and then immersed with a 3% nital etchant for 10 seconds, and the structure was exposed by etching. The etched observation surface was observed using an optical microscope at a magnification of 100 in 3 fields of view. A region in which the aspect ratio (length in rolling direction/length in sheet thickness direction) of ferrite grains was 3 or less was identified, and the average grain size of ferrite in that region was determined according to JIS G 0551: 2013 "microscopic test method of steel-crystal grain size."

### [Number density measurement test for inclusion]

8 steel sheets having a sheet thickness of 0.25 mm were superimposed, and a test piece was filled with a resin so that a surface including a width direction (direction perpendicular to a rolling direction) and a sheet thickness direction became the observation surface, and the observation surface of the resin-filled test piece was polished. The superimposed full-sheet thickness region was observed using an SEM with EDS. The size of inclusions was measured using image analysis software, and the diameter when converted to an equivalent circle diameter was calculated. In a range of 5 mm², all inclusions having an equivalent circle diameter of 1 µm or more were observed. Then, inclusions of 1 µm or more were subjected to EDS analysis, among inclusions having a "S content of 5 mass% or more" and a "Mn content of 5 mass% or more," the number density of inclusions having a "Mg content of 5 mass% or less and more than 5 mass%" was measured. When the number density (pieces/mm²) was obtained based on the total area, the obtained numerical value was rounded off to the third decimal place, and used as the number density of inclusions having an equivalent circle diameter of 1 µm or more. Inclusions having an equivalent circle diameter of more than 5 µm were determined only by their size regardless of components, and similarly, the number density was measured based on the total area. In this case, since there was no need to calculate the ratio, the number density was obtained by performing rounding off to the second decimal place.

### [Magnetic properties]

The iron loss W_{10/400} of the non-oriented electrical steel sheet at a frequency of 400 Hz and a magnetic flux density of 1.0 T was obtained by an excitation current method according to a method for measuring magnetic properties of electromagnetic steel strips using an Epstein tester described in JIS C 2550-1: 2011.

The results are shown in Table 3B. In Table 3B, "Mg: 5% or less" means the number of "inclusions having a Mg content of 5 mass% or less and a Mn content of 5% or more" per 1 mm², "Mg: more than 5%" means the number of "inclusions having a Mg content of more than 5% and a Mn content of 5% or more" per 1 mm², and the ratio is a ratio of the number of "inclusions having a Mg content of more than 5% and a Mn content of 5% or more" to the number of "inclusions having a Mg content of 5 mass% or less and a Mn content of 5% or more." In addition, in Table 3, "5 µm or more" indicates the number density (pieces/mm²) of inclusions having an equivalent circle diameter of 5 µm or more.

**[Table 2A]**

| Test No. | Steel type | Chemical composition (mass%, remainder of Fe and impurities) | | | | | | | | | | | | |
|---|---|---|---|---|---|---|---|---|---|---|---|---|---|---|
| | | Si | sol. Al | Mn | C | P | S | N | O | Mg | Ti | V | Zr | Sb |
| 1 | A | 3.4 | 0.3 | 0.9 | 0.0021 | 0.01 | 0.0011 | 0.0026 | 0.0015 | 0.0007 | 0.0013 | - | - | - |
| 2 | B | 2.6 | 1.3 | 1.5 | 0.0026 | 0.04 | 0.0021 | 0.0022 | 0.0028 | 0.0004 | 0.0007 | - | - | - |
| 3 | C | 3.7 | 0.3 | 1.0 | 0.0029 | 0.01 | 0.0006 | 0.0024 | 0.0020 | 0.0003 | 0.0011 | - | - | - |
| 4 | D | 3.2 | 0.4 | 0.5 | 0.0022 | 0.01 | 0.0014 | 0.0022 | 0.0026 | 0.0001 | 0.0014 | - | - | - |
| 5 | E | 2.4 | 1.2 | 0.7 | 0.0022 | 0.08 | 0.0013 | 0.0023 | 0.0026 | 0.0010 | 0.0008 | - | - | - |
| 6 | F | 3.5 | 0.2 | 0.4 | 0.0027 | 0.06 | 0.0007 | 0.0017 | 0.0014 | 0.0008 | 0.0018 | - | - | - |
| 7 | G | 3.2 | 1.2 | 0.6 | 0.0016 | 0.01 | 0.0015 | 0.0014 | 0.0011 | 0.0006 | 0.0009 | - | - | - |
| 8 | H | 4.1 | 0.3 | 0.4 | 0.0018 | 0.01 | 0.0018 | 0.0024 | 0.0016 | 0.0034 | 0.0022 | - | - | - |
| 9 | I | 3.1 | 0.4 | 3.0 | 0.0022 | 0.01 | 0.0023 | 0.0019 | 0.0014 | 0.0021 | 0.0027 | - | - | - |
| 10 | J | 2.8 | 1.8 | 1.2 | 0.0026 | 0.01 | 0.0014 | 0.0021 | 0.0019 | 0.0014 | 0.0012 | - | - | - |
| 11 | K | 3.1 | 1.2 | 0.4 | 0.0018 | 0.02 | 0.0013 | 0.0017 | 0.0025 | 0.0011 | 0.0024 | - | - | - |
| 12 | L | 3.3 | 0.5 | 0.5 | 0.0024 | 0.01 | 0.0021 | 0.0022 | 0.0017 | 0.0013 | 0.0011 | - | - | - |
| 13 | M | 3.5 | 0.3 | 0.6 | 0.0015 | 0.01 | 0.0009 | 0.0027 | 0.0013 | 0.0011 | 0.0007 | - | - | - |
| 14 | N | 3.5 | 0.5 | 0.6 | 0.0017 | 0.01 | 0.0007 | 0.0021 | 0.0020 | 0.0023 | 0.0016 | - | - | - |
| 15 | O | 3.2 | 0.3 | 0.9 | 0.0014 | 0.01 | 0.0011 | 0.0018 | 0.0027 | 0.0025 | 0.0019 | - | - | - |
| 16 | P | 3.3 | 0.7 | 0.9 | 0.0018 | 0.01 | 0.0017 | 0.0011 | 0.0022 | 0.0016 | 0.0006 | 0.0019 | - | - |
| 17 | Q | 3.5 | 0.3 | 0.2 | 0.0022 | 0.01 | 0.0011 | 0.0014 | 0.0024 | 0.0023 | 0.0011 | - | - | - |
| 18 | R | 3.2 | 0.6 | 0.4 | 0.0026 | 0.01 | 0.0008 | 0.0023 | 0.0015 | 0.0016 | 0.0013 | - | - | - |
| 19 | S | 2.9 | 0.4 | 1.7 | 0.0011 | 0.02 | 0.0021 | 0.0016 | 0.0022 | 0.0017 | 0.0021 | - | - | 0.0050 |
| 20 | T | 3.8 | 0.6 | 0.3 | 0.0024 | 0.01 | 0.0016 | 0.0017 | 0.0026 | 0.0016 | 0.0023 | - | - | - |
| 21 | U | 3.1 | 0.2 | 0.2 | 0.0022 | 0.05 | 0.0028 | 0.0027 | 0.0028 | 0.0002 | 0.0029 | - | - | - |
| 22 | V | 3.6 | 0.4 | 1.2 | 0.0017 | 0.01 | 0.0022 | 0.0015 | 0.0018 | 0.0016 | 0.0012 | - | - | - |
| 23 | W | 3.7 | 0.9 | 0.1 | 0.0025 | 0.01 | 0.0027 | 0.0021 | 0.0018 | 0.0031 | 0.0011 | - | 0.0023 | |

| | | | | | | | | | | | | | | |
|---|---|---|---|---|---|---|---|---|---|---|---|---|---|---|
| "-" indicates that the component was not intentionally added | | | | | | | | | | | | | | |

**[Table 2B]**

| Test No. | Steel type | Chemical composition (mass%, remainder Fe and impurities) | | | | | | | | | | | |
|---|---|---|---|---|---|---|---|---|---|---|---|---|---|
| | | Nd | Bi | W | Nb | Y | Ni | Cr | Cu | Sn | La | Ce | Zn |
| 1 | A | - | - | - | - | - | - | 0.05 | - | - | - | - | - |
| 2 | B | - | - | - | - | - | - | - | - | 0.03 | - | - | - |
| 3 | C | - | - | - | - | - | 0.04 | - | - | - | - | - | - |
| 4 | D | - | - | - | - | - | - | - | 0.06 | - | - | - | - |
| 5 | E | - | - | - | - | - | - | - | - | - | - | - | - |
| 6 | F | - | - | - | - | - | - | 0.07 | - | - | - | - | - |
| 7 | G | - | - | - | - | - | - | - | - | - | - | - | - |
| 8 | H | - | - | - | - | - | 0.07 | - | - | - | - | - | - |
| 9 | I | - | - | - | - | - | - | - | - | - | - | - | - |
| 10 | J | - | - | - | - | - | - | - | 0.04 | - | - | - | - |
| 11 | K | - | - | - | - | - | - | - | - | - | - | - | - |
| 12 | L | - | - | - | - | - | - | - | - | - | - | - | - |
| 13 | M | - | - | - | - | - | - | - | - | - | - | - | - |
| 14 | N | - | - | - | - | - | - | - | - | 0.02 | 0.0010 | 0.0020 | - |
| 15 | O | - | - | - | - | - | 0.05 | 0.05 | - | - | - | - | - |
| 16 | P | - | - | 0.0011 | 0.0016 | - | - | - | - | - | - | - | - |
| 17 | Q | 0.0010 | - | - | - | 0.0011 | - | - | - | - | 0.0020 | 0.0010 | - |
| 18 | R | - | - | - | - | - | - | - | - | - | - | - | - |
| 19 | S | - | 0.0012 | - | - | - | - | - | - | 0.01 | - | - | - |
| 20 | T | - | - | - | - | - | - | - | - | - | - | - | 0.0013 |
| 21 | U | - | - | - | - | - | - | - | - | - | - | - | - |
| 22 | V | - | - | - | - | - | - | - | - | - | - | - | - |
| 23 | W | - | - | - | - | - | - | - | - | - | - | - | - |

| | | | | | | | | | | | | | |
|---|---|---|---|---|---|---|---|---|---|---|---|---|---|
| "-" indicates that the component was not intentionally added | | | | | | | | | | | | | |

**[Table 3A]**

| Test No. | Steel type | Slab thickness (mm) | Cooling rate at 1,300°C to 1,200°C in casting (°C/s) | Holding time at a center temperature of 1,100°C or higher in heating of slab (hours) | Coiling temperature (°C) | Maximum temperature during final annealing (°C) | Sheet thickness (mm) |
|---|---|---|---|---|---|---|---|
| 1 | A | 250 | 30 | 1 | 720 | 810 | 0.25 |
| 2 | B | 250 | 30 | 1 | 720 | 840 | 0.25 |
| 3 | C | 250 | 30 | 1 | 720 | 890 | 0.25 |
| 4 | D | 250 | 30 | 1 | 720 | 760 | 0.25 |
| 5 | E | 250 | 30 | 1 | 720 | 800 | 0.25 |
| 6 | F | 250 | 30 | 1 | 900 | 810 | 0.25 |
| 7 | G | 250 | 30 | 1 | 720 | 880 | 0.25 |
| 8 | H | 250 | 30 | 1 | 720 | 890 | 0.25 |
| 9 | I | 350 | 30 | 1 | 720 | 860 | 0.25 |
| 10 | J | 150 | 30 | 1 | 720 | 850 | 0.25 |
| 11 | K | 250 | 60 | 1 | 720 | 820 | 0.25 |
| 12 | L | 250 | 30 | 3 | 720 | 800 | 0.25 |
| 13 | M | 250 | 30 | 1 | 720 | 950 | 0.25 |
| 14 | N | 250 | 30 | 1 | 720 | 850 | 0.25 |
| 15 | O | 250 | 30 | 1 | 720 | 740 | 0.25 |
| 16 | P | 250 | 1 | 1 | 720 | 840 | 0.25 |
| 17 | Q | 250 | 50 | 1 | 720 | 850 | 0.25 |
| 18 | R | 250 | 1 | 1 | 680 | 810 | 0.25 |
| 19 | S | 250 | 1 | 1 | 720 | 710 | 0.25 |
| 20 | T | 250 | 0.5 | 1 | 720 | 880 | 0.25 |
| 21 | U | 250 | 1 | 1 | 720 | 730 | 0.30 |
| 22 | V | 250 | 1 | 1 | 720 | 690 | 0.25 |
| 23 | W | 250 | 1 | 1 | 720 | 890 | 0.25 |

| | | | | | | | |
|---|---|---|---|---|---|---|---|
| Underlines indicate outside of the scope of the prevent invention or that desired properties were not obtained. | | | | | | | |

**[Table 3B]**

| Test No. | Steel type | Mg: 5% or less (pieces/mm²) | Mg: more than 5% (pieces/mm²) | Ratio | 5 µm or more (pieces/mm²) | Average crystal grain diameter of recrystallization part of base iron (µm) | Tensile strength (MPa) | Fatigue strength (MPa) | W10/400 (W/kg) | Note |
|---|---|---|---|---|---|---|---|---|---|---|
| 1 | A | 0.04 | 0.77 | 19.3 | 0.7 | 18 | 608 | 480 | 16.2 | Example of present invention |
| 2 | B | 0.13 | 0.84 | 6.5 | 0.7 | 21 | 583 | 460 | 15.4 | Example of present invention |
| 3 | C | 0.04 | 0.22 | 5.5 | 0.9 | 36 | 614 | 470 | 13.6 | Example of present invention |
| 4 | D | 0.35 | 0.14 | 0.4 | 1.1 | 12 | 605 | 440 | 18.2 | Comparative Example |
| 5 | E | 0.30 | 1.30 | 4.3 | 0.6 | 17 | 561 | 440 | 16.7 | Comparative Example |
| 6 | F | 0.02 | 0.56 | 28.0 | 0.7 | 19 | 616 | 490 | 16.2 | Example of present invention |
| 7 | G | 0.06 | 0.90 | 15.0 | 0.7 | 31 | 600 | 460 | 14.0 | Reference Example |
| | | | | | | | | | | |
| 8 | H | 0.01 | 2.10 | 210.0 | 0.3 | 45 | 639 | 490 | 12.9 | Example of present invention |
| 9 | I | 0.03 | 1.82 | 60.7 | 0.4 | 27 | 605 | 470 | 14.1 | Example of present invention |
| 10 | J | 0.03 | 1.21 | 40.3 | 0.5 | 26 | 605 | 470 | 14.3 | Example of present invention |
| 11 | K | 0.15 | 0.43 | 2.9 | 0.3 | 20 | 606 | 440 | 15.7 | Comparative Example |
| 12 | L | 0.22 | 0.84 | 3.8 | 0.5 | 16 | 604 | 440 | 16.8 | Comparative Example |
| 13 | M | 0.02 | 0.99 | 49.5 | 0.6 | 60 | 567 | 420 | 12.7 | Comparative Example |
| 14 | N | 0.01 | 1.24 | 124.0 | 0.4 | 27 | 605 | 470 | 14.7 | Example of present invention |
| 15 | O | 0.01 | 1.82 | 182.0 | 0.4 | 13 | 603 | 490 | 17.7 | Example of present invention |
| 16 | P | 0.03 | 2.72 | 90.7 | 0.5 | 26 | 594 | 470 | 14.8 | Reference Example |
| 17 | Q | 0.01 | 1.78 | 178.0 | 0.4 | 23 | 593 | 470 | 15.6 | Reference Example |
| 18 | R | 0.41 | 1.28 | 3.1 | 0.4 | 19 | 588 | 440 | 16.2 | Comparative Example |
| 19 | S | 0.03 | 3.57 | 119.0 | 0.5 | 13 | 595 | 480 | 17.6 | Reference Example |
| 20 | T | 0.03 | 2.56 | 85.3 | 0.4 | 32 | 630 | 490 | 14.0 | Example of present invention |
| 21 | U | 0.05 | 3.92 | 78.4 | 1.0 | 12 | 589 | 430 | 20.1 | Comparative Example |
| 22 | V | 0.03 | 3.52 | 117.3 | 0.8 | 9 | 682 | 550 | 20.1 | Comparative Example |
| 23 | W | 0.02 | 2.15 | 107.5 | 0.4 | 38 | 623 | 480 | 13.4 | Example of present invention |

| | | | | | | | | | | |
|---|---|---|---|---|---|---|---|---|---|---|
| Underlines indicate outside of the scope of the prevent invention or that desired properties were not obtained. | | | | | | | | | | |

According to the present invention, it was confirmed that a non-oriented electrical steel sheet having a tensile strength of 580 MPa or more and a fatigue strength of 450 MPa or more was obtained.

## Claims

1. A non-oriented electrical steel sheet having a chemical composition containing, in mass%,
Si: 2.5 to 4.5%,
sol. Al: 0 to 2.0%,
Mn: 0.1 to 3.5%,
C: 0 to 0.0030%,
P: 0 to 0.10%,
S: more than 0 and 0.0030% or less,
N: 0.0017 to 0.050%,
O: 0 to 0.050%,
Mg: 0.0003 to 0.0050%,
Ti: 0 to 0.0030%,
V: 0 to 0.10%,
Sb: 0 to 0.10%,
Nd: 0 to 0.10%,
Bi: 0 to 0.10%,
W: 0 to 0.10%,
Nb: 0 to 0.10%,
Y: 0 to 0.10%,
Zr: 0 to 0.10%
Ca: 0 to 0.0050%
As: 0 to 0.01%
Ga: 0 to 0.01%
Ge: 0 to 0.01%
Se: 0 to 0.01%
Co: 0 to 0.01%
Pb: 0 to 0.01%
and, one or more selected from the group consisting of
Ni: 0 to 0.5%,
Cr: 0 to 0.5%,
Cu: 0 to 0.5%,
Sn: 0 to 0.2%,
La: 0 to 0.0050%, and
Ce: 0 to 0.0050%, with the remainder of Fe and impurities,
wherein a tensile strength is 580 MPa or more,
an average grain size of a recrystallization part of base iron, determined as set out in the description, is 50 µm or less, and
in inclusions having an equivalent circle diameter of 1 µm or more and having an S content of 5 mass% or more contained in base iron, the number of inclusions having a Mg content of more than 5 mass% and a Mn content of 5 mass% or more is 5 times or more the number of inclusions having a Mg content of 5 mass% or less and a Mn content of 5 mass% or more, wherein the inclusions are determined as set out in the description.

2. The non-oriented electrical steel sheet according to claim 1,
wherein the number density of inclusions having an equivalent circle diameter of 5 µm or more is less than 1.0 piece/mm², which is determined as set out in the description.

3. The non-oriented electrical steel sheet according to claim 1,
wherein the sheet thickness is less than 0.30 mm.

4. A method for manufacturing the non-oriented electrical steel sheet according to claim 1, comprising:
manufacturing a steel slab by casting;
heating the steel slab;
hot rolling the heated steel slab to obtain a hot-rolled steel sheet;
coiling the hot-rolled steel sheet;
cold rolling the hot-rolled steel sheet to obtain a cold-rolled steel sheet; and
final annealing the cold-rolled steel sheet to obtain a non-oriented electrical steel sheet,
wherein, in the casting, a cooling rate at 1,300°C to 1,200°C is set to 50°C/s or slower,
in the heating of the steel slab, a holding time at a center temperature of 1,100°C or higher is set to be shorter than 2 hours, excluding 0,
in the coiling, a coiling temperature of the hot-rolled steel sheet is set to 700°C or higher, and
in the final annealing, the maximum temperature is set to 700 to 900°C.

## Patentansprüche

1. Ein nicht-orientiertes Elektrostahlblech mit einer chemischen Zusammensetzung, die, in Massen-%,
Si: 2,5 bis 4,5%,
gelöstes Al: 0 bis 2,0%,
Mn: 0,1 bis 3,5%,
C: 0 bis 0,0030%,
P: 0 bis 0,10%,
S: mehr als 0 und 0,0030% oder weniger,
N: 0,0017 bis 0,050%,
O: 0 bis 0,050%,
Mg: 0,0003 bis 0,0050%,
Ti: 0 bis 0,0030%,
V: 0 bis 0,10%,
Sb: 0 bis 0,10%,
Nd: 0 bis 0,10%,
Bi: 0 bis 0,10%,
W: 0 bis 0,10%,
Nb: 0 bis 0,10%,
Y: 0 bis 0,10%,
Zr: 0 bis 0,10%
Ca: 0 bis 0,0050%
As: 0 bis 0,01%
Ga: 0 bis 0,01%
Ge: 0 bis 0,01%
Se: 0 bis 0,01%
Co: 0 bis 0,01%
Pb: 0 bis 0,01%
und eines oder mehrere, ausgewählt aus der Gruppe bestehend aus
Ni: 0 bis 0,5%,
Cr: 0 bis 0,5%,
Cu: 0 bis 0,5%,
Sn: 0 bis 0,2%,
La: 0 bis 0,0050% und
Ce: 0 bis 0,0050%, mit dem Rest aus Fe und Verunreinigungen,
enthält,
wobei eine Zugfestigkeit 580 MPa oder mehr beträgt,
eine mittlere Korngröße eines Rekristallisationsanteils des Basiseisens, bestimmt wie in der Beschreibung dargelegt, 50 µm oder weniger beträgt und
bei Einschlüssen mit einem flächengleichen Kreisdurchmesser von 1 µm oder mehr und einem S-Gehalt von 5 Massen-% oder mehr, die in dem Basiseisen enthalten sind, die Anzahl an Einschlüssen mit einem Mg-Gehalt von mehr als 5 Massen-% und einem Mn-Gehalt von 5 Massen-% oder mehr das Fünffache oder mehr der Anzahl an Einschlüssen mit einem Mg-Gehalt von 5 Massen-% oder weniger und einem Mn-Gehalt von 5 Massen-% oder mehr beträgt, wobei die Einschlüsse wie in der Beschreibung dargelegt bestimmt werden.

2. Das nicht-orientierte Elektrostahlblech nach Anspruch 1,
wobei die Zahlendichte an Einschlüssen mit einem flächengleichen Kreisdurchmesser von 5 µm oder mehr weniger als 1,0 Stück/mm² beträgt, was wie in der Beschreibung dargelegt bestimmt wird.

3. Das nicht-orientierte Elektrostahlblech nach Anspruch 1,
wobei die Blechdicke weniger als 0,30 mm beträgt.

4. Ein Verfahren zur Herstellung des nicht-orientierten Elektrostahlblechs nach Anspruch 1, umfassend:
Herstellen einer Stahlbramme durch Gießen;
Erwärmen der Stahlbramme;
Warmwalzen der erwärmten Stahlbramme, um ein warmgewalztes Stahlblech zu erhalten;
Aufwickeln des warmgewalzten Stahlblechs;
Kaltwalzen des warmgewalzten Stahlblechs, um ein kaltgewalztes Stahlblech zu erhalten; und
Endglühen des kaltgewalzten Stahlblechs, um ein nicht-orientiertes Elektrostahlblech zu erhalten,
wobei beim Gießen eine Abkühlgeschwindigkeit bei 1.300°C bis 1.200°C auf 50°C/s oder langsamer eingestellt wird,
beim Erwärmen der Stahlbramme eine Haltezeit bei einer Kerntemperatur von 1.100°C oder höher auf kürzer als 2 Stunden, ausgenommen 0, eingestellt wird,
beim Aufwickeln eine Aufwickeltemperatur des warmgewalzten Stahlblechs auf 700°C oder höher eingestellt wird und
beim Endglühen die maximale Temperatur auf 700 bis 900°C eingestellt wird.

## Revendications

1. Tôle d'acier magnétique non orientée ayant une composition chimique contenant, en % en masse,
Si : 2,5 à 4,5 %,
Al sol. : 0 à 2,0 %,
Mn : 0,1 à 3,5 %,
C : 0 à 0,0030 %,
P : 0 à 0,10 %,
S : plus de 0 et 0,0030 % ou moins,
N : 0,0017 à 0,050 %,
O : 0 à 0,050 %,
Mg : 0,0003 à 0,0050 %,
Ti : 0 à 0,0030 %,
V : 0 à 0,10 %,
Sb : 0 à 0,10 %,
Nd : 0 à 0,10 %,
Bi : 0 à 0,10 %,
W : 0 à 0,10 %,
Nb : 0 à 0,10 %,
Y : 0 à 0,10 %,
Zr : 0 à 0,10 %,
Ca : 0 à 0,0050 %,
As : 0 à 0,01 %,
Ga : 0 à 0,01 %,
Ge : 0 à 0,01 %,
Se : 0 à 0,01 %,
Co : 0 à 0,01 %,
Pb : 0 à 0,01 %,
et un ou plusieurs choisis dans le groupe constitué par
Ni : 0 à 0,5 %,
Cr : 0 à 0,5 %,
Cu : 0 à 0,5 %,
Sn : 0 à 0,2 %,
La : 0 à 0,0050 %, et
Ce : 0 à 0,0050 %,
le reste étant du Fe et des impuretés,
dans laquelle la résistance à la traction est de 580 MPa ou plus,
la taille moyenne du grain de la partie recristallisée du fer de base, déterminée comme indiqué dans la description, est de 50 µm ou moins, et
dans les inclusions ayant un diamètre de cercle équivalent de 1 µm ou plus et ayant une teneur en S de 5 % en masse ou plus contenues dans le fer de base, le nombre d'inclusions ayant une teneur en Mg supérieure à 5 % en masse et une teneur en Mn de 5 % en masse ou plus est de 5 fois ou plus le nombre d'inclusions ayant une teneur en Mg de 5 % en masse ou moins et une teneur en Mn de 5 % en masse ou plus, dans laquelle les inclusions sont déterminées comme indiqué dans la description.

2. Tôle d'acier magnétique non orientée selon la revendication 1, dans laquelle la densité en nombre d'inclusions ayant un diamètre de cercle équivalent de 5 µm ou plus est inférieure à 1,0 pièce/mm², qui est déterminée comme indiqué dans la description.

3. Tôle d'acier magnétique non orientée selon la revendication 1, dans laquelle l'épaisseur de la tôle est inférieure à 0,30 mm.

4. Méthode pour fabriquer la tôle d'acier magnétique non orientée selon la revendication 1, comprenant :
la fabrication d'une brame d'acier par coulée ;
le chauffage de la brame d'acier ;
le laminage à chaud de la brame d'acier chauffée pour que soit obtenue une tôle d'acier laminée à chaud ;
le bobinage de la tôle d'acier laminée à chaud ;
le laminage à froid de la tôle d'acier laminée à chaud pour que soit obtenue une tôle d'acier laminée à froid ; et
le recuit final de la tôle d'acier laminée à froid pour que soit obtenue une tôle d'acier magnétique non orientée,
dans laquelle, lors de la coulée, la vitesse de refroidissement de 1 300 °C à 1 200 °C est établie à 50 °C/s ou moins,
lors du chauffage de la brame d'acier, le temps de maintien à une température centrale de 1 100 °C ou plus est établi de façon à être inférieur à 2 heures, à l'exclusion de 0,
lors du bobinage, la température de bobinage de la tôle d'acier laminée à chaud est établie à 700 °C ou plus, et
lors du recuit final, la température maximale est établie à 700 à 900 °C.
